# EUROPÄISCHE PATENTSCHRIFT

(11) **EP 2 064 806 B1**
(45) Veröffentlichungstag und Bekanntmachung des Hinweises auf die Patenterteilung: **12.10.2011**
(21) Anmeldenummer: 07802025.2
(22) Anmeldetag: 31.08.2007
(51) Int. Cl.: H02M 3/158, H02M 1/42, G05F 1/70

(54) **STROMVERSORGUNGSVORRICHTUNG MIT LEISTUNGSFAKTORKORREKTUR**
POWER SUPPLY DEVICE WITH POWER FACTOR CORRECTION
DISPOSITIF D'ALIMENTATION EN COURANT ÉLECTRIQUE À CORRECTION DU FACTEUR DE PUISSANCE

(30) Priorität: 22.09.2006 DE 102006044879
(43) Veröffentlichungstag der Anmeldung: 03.06.2009
(73) Patentinhaber: Recaro Aircraft Seating GmbH & Co. KG, 74523 Schwäbisch Hall (DE)
(72) Erfinder: WAGNER, Wolfgang, 88048 Friedrichshafen (DE)
(74) Vertreter: Daub, Thomas
(86) Internationale Anmeldenummer: PCT/EP2007/007607
(87) Internationale Veröffentlichungsnummer: WO 2008/034515

(56) Entgegenhaltungen:
- EP-A- 0 748 035
- EP-A- 0 977 337
- WO-A-02/052688

## Beschreibung

### Stand der Technik

Die Erfindung geht aus von einer Stromversorgungsvorrichtung nach dem Oberbegriff des Anspruchs 1.

Es sind bereits Stromversorgungsvorrichtungen, insbesondere zur Anwendung in Flugzeugen, bekannt, die eine Regeleinheit aufweisen, die dazu vorgesehen sind, einen Stromverlauf an einen Spannungsverlauf anzugleichen.

Die Dokumente EP 0748035, WO 02/052 688 und 0977337 zeigen LeistungsFaktorkorrektur schaltungen mit zuschaltbaren widerstands-einheiten zur Einschaltstrom Begrenzung Vorteile der Erfindung

Die Erfindung geht aus von einer Stromversorgungsvorrichtung, insbesondere für ein Flugzeug, mit einer Regeleinheit, die dazu vorgesehen ist, einen Stromverlauf an einen Spannungsverlauf anzugleichen. Dabei soll unter "angleichen" insbesondere zumindest eine Annäherung des Spannungsverlaufs an den Stromverlauf verstanden werden.

Es wird vorgeschlagen, dass die Stromversorgungseinheit wenigstens eine Aktiveinheit mit zumindest einer zuschaltbaren Einheit aufweist. Unter einer "Aktiveinheit" soll dabei insbesondere eine Einheit verstanden werden, die dazu vorgesehen ist, zumindest teilautomatisiert einen Schaltvorgang zu realisieren. Ferner soll unter der "zuschaltbaren Einheit" insbesondere eine Einheit verstanden werden, mittels der der Stromverlauf in einem Arbeitsbereich beeinflusst werden kann. Unerwünschten Abweichungen des Stromverlaufs vom Spannungsverlauf trotz der Regelung durch die Regelungseinheit können damit vorteilhaft zumindest entgegengewirkt werden. Ferner kann eine Filterung in einem weiteren Frequenzbereich, insbesondere zwischen 350 - 800 Hz erreicht, ein Klirrfaktor kann verbessert und es kann eine vorteilhafte Begrenzung eines Einschaltstroms erzielt werden.

Die Aktiveinheit ist dazu vorgesehen, die Einheit im Bereich eines Nulldurchgangs des Spannungsverlaufs zuzuschalten, damit können insbesondere im Bereich des Nullpunkts des Spannungsverlaufs bzw. im Nulldurchgang Abweichungsfehler zumindest reduziert werden. Dabei soll unter "Bereich eines Nulldurchgangs des Spannungsverlaufs" insbesondere ein Bereich unter 30%, vorzugsweise unter 20% und besonders vorteilhaft unter 15% der maximal anliegenden Spannung verstanden werden.

Ferner wird die Einheit von einer Widerstandseinheit gebildet, wobei unter einer "Widerstandseinheit" insbesondere eine Einheit verstanden soll, die dazu vorgesehen ist, in zumindest einem Arbeitsbereich in einem Nulldurchgang einen ohmschen Widerstand nachzubilden, wie beispielsweise ein Feldeffekttransistor, und/oder vorzugsweise zumindest einen ohmschen Widerstand, wodurch die Widerstandseinheit konstruktiv besonders einfach realisierbar ist. Mittels einer Widerstandseinheit kann vorteilhaft einfach die Filterung in einem weiteren Frequenzbereich erreicht, der Klirrfaktor verbessert und es kann eine vorteilhafte Begrenzung eines Einschaltstroms erzielt werden, und zwar insbesondere, indem auf einen Eingangswiderstand der Regeleinheit verzichtet oder dessen Widerstandswert zumindest reduziert werden kann.

Die Einheit kann von verschiedenen, dem Fachmann als sinnvoll erscheinenden Einheiten gebildet sein, insbesondere vorteilhaft von einer Einheit, die zumindest in einem Arbeitsbereich, vorzugsweise in einem Nulldurchgang der Spannung, ein zumindest im Wesentlichen lineares Verhalten aufweist, wobei unter "im Wesentlichen" insbesondere verstanden werden soll, dass dessen Verhalten weniger als 10% von einem theoretisch vollständig linearen Verhalten abweicht.

Weist die Einheit zumindest in einem Bereich wenigstens einen von einem Temperaturwert abhängigen Kennwert auf, um ein gezieltes Temperaturverhalten zu erreichen, kann vorteilhaft eine gewünschte automatisierte Anpassung an einen sich verändernden Temperaturwert erreicht werden und es kann eine vorteilhafte Linearisierung über der Last erzielt werden. Unter einem "gezielten Temperaturverhalten" soll dabei insbesondere verstanden werden, dass die Einheit gezielt in der Weise gewählt ist, dass sich dessen Verhalten mit dem Temperaturwert verändert.

Besonders vorteilhaft weist die Einheit ein NTC-Verhalten auf (NTC: Negative Temperature Coefficient), so dass mit steigender Temperatur ein Kennwert abfällt, wie vorteilhaft ein elektrischer Widerstand, wodurch eine erhöhte Sicherheit erreicht werden kann. Zur Erzielung des NTC-Verhaltens kann die Einheit verschiedene, dem Fachmann als geeignet erscheinende Bauteile aufweisen, vorteilhaft weist die Einheit jedoch zumindest einen NTC-Widerstand auf, wodurch ein entsprechendes Verhalten konstruktiv einfach und kostengünstig realisiert werden kann.

In einer weiteren Ausgestaltung der Erfindung wird vorgeschlagen, dass die Aktiveinheit wenigstens eine Steuereinheit aufweist, die dazu vorgesehen ist, zumindest bei einem bestimmten Phasenwinkel einen Schaltvorgang einzuleiten, wodurch gezielt bei bestimmten Phasenwinkeln auftretenden Störeffekten entgegengewirkt werden kann. Dabei kann die Steuereinheit von verschiedenen, dem Fachmann als sinnvoll erscheinenden Einheiten gebildet sein, wie insbesondere von Phasenwinkelvergleichern und/oder von Einheiten, die bei bestimmten Zeiten schalten, bei denen bestimmte Phasenwinkel vorliegen usw. Eine Schaltschwelle kann an eine Phasenlage und/oder an eine Amplitude gekoppelt sein.

Vorzugsweise weist die Aktiveinheit wenigstens einen Komparator auf, wodurch konstruktiv einfach ein gewünschter Schaltvorgang, insbesondere bei einem bestimmten Phasenwinkel, gezielt erreicht werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Stromversorgungsvorrichtung und
- Fig. 2: einen Spannungsverlauf.

### Beschreibung des Ausführungsbeispiels.

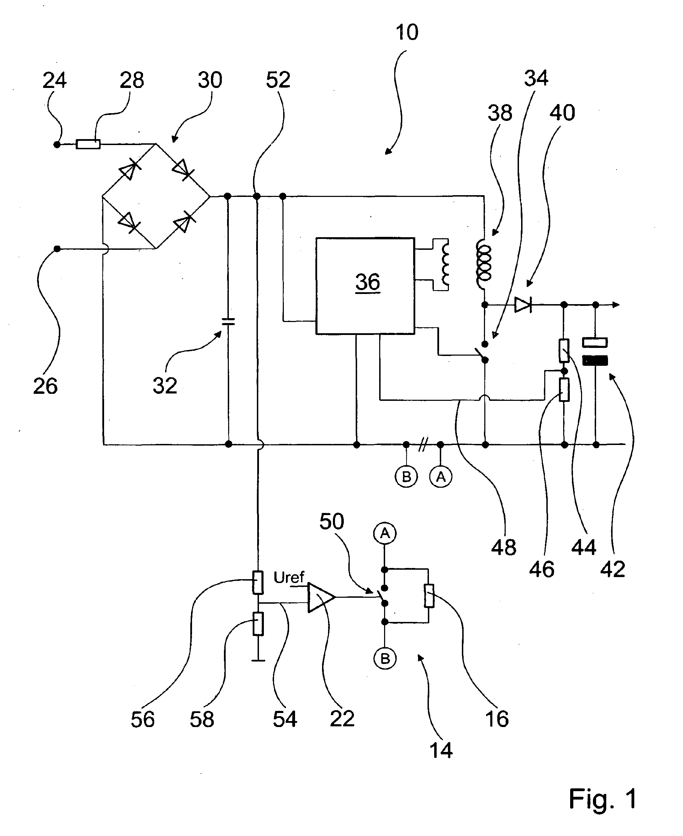

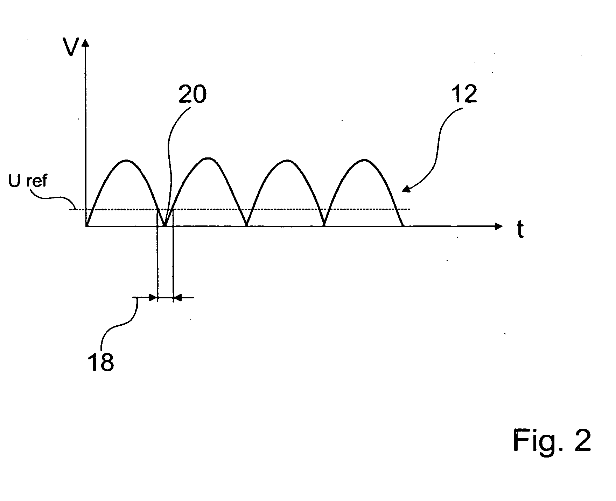

Figur 1 zeigt eine schematisch dargestellte Stromversorgungsvorrichtung für ein Flugzeug mit einer Regeleinheit 10, die dazu vorgesehen ist, einen Stromverlauf an einen Spannungsverlauf 12 anzugleichen (Figuren 1 und 2). Die Regeleinheit 10 ist mit den Anschlüssen 24, 26 mit einer nicht näher dargestellten AC Stromquelle (AC: alternating current) verbunden und weist nach dem Anschluss einen NTC-Widerstand 28 auf, um einen Einschaltstrom zu begrenzen. An den NTC-Widerstand 28 schließt sich ein Brückengleichrichter 30 der Regeleinheit 10 an. Ferner umfasst die Regeleinheit 10 einen Pufferkondensator 32 für einen Schalter 34 der Regeleinheit 10, der von einem PFC-Chip 36 (PFC: Power Factor Correction) der Regeleinheit 10 geschaltet wird. Zudem weist die Regeleinheit 10 einen mit dem PFC-Chip 36 gekoppelte Elektronikeinheit 38 mit einer Drossel und einer Hilfsspule zur Energiespeicherung, eine der Elektronikeinheit 38 nachgeschaltete Diode 40 zur Gleichrichtung und einen der Diode 40 nachgeschalteten Kondensator 42 auf. Ferner weist die Regeleinheit 10 der Diode 40 nachgeschaltete, parallel zum Kondensator 42 geschaltete Widerstände 44, 46 zur Spannungsrückführung auf, wobei ein zwischen den Widerständen 44, 46 angekoppelter Pfad 48 zum PFC-Chip 36 geführt ist. Die Aufgabe der Regeleinheit 10 ist es, einen Strom zu erzeugen, der möglichst exakt der Sinus-Form der Spannung folgt. Dieses gilt sowohl für die Sinus-Form des Stroms als auch für die Phasenlage zwischen Strom und Spannung. Dies bedeutet, dass die Regeleinheit 10 dazu vorgesehen ist, quasi eine ohmsche Last zu simulieren.

Neben der Regeleinheit 10 weist die Stromversorgungsvorrichtung eine Aktiveinheit 14 mit einer von einem ohmschen NCT-Widerstand gebildeten zuschaltbaren Einheit 16 auf. Die Aktiveinheit 14 ist an den mit A und B gekennzeichneten Andockpunkten dem Schalter 34 in Reihe nachgeschaltet bzw. in den Strompfad des Schalters 34 integriert. Die Aktiveinheit 14 weist eine von einem Komparator gebildete Steuereinheit 22 auf, die dazu vorgesehen ist, eine nach dem Brückengleichrichter 30 anliegende Spannung mit einer Referenzspannung U_{ref} zu vergleichen, die zwischen 5% und 15%, vorzugsweise ca. 10% der maximalen Spannung bzw. ca. 15 V beträgt, und damit bei einem bestimmten Phasenwinkel die Einheit 16 in einem Bereich 18 eines Nulldurchgangs 20 des Spannungsverlaufs 12 mittels eines Schalters 50 zuzuschalten. Ausgehend von einem Anschluss 52 nach dem Brückengleichrichter 30 ist einem Pfad 54 zur Steuereinheit 22 ein Widerstand 56 vor- und ein Widerstand 58 nachgeschaltet, wobei der zweite Widerstand 58 an Masse gelegt ist.

Oberhalb der Referenzspannung U_{ref} ist der Schalter 50 geschlossen. Wird die Referenzspannung U_{ref} unterschritten, wird von der Steuereinheit 22 der Schalter 50 geöffnet und der Strom des Schalters 34, der vom PFC-Chip 36 gesteuert wird, fließt über die Einheit 16, was sich auf die Taktfrequenz des PFC-Chips 36 auswirkt, indem eine weiche Kennlinie erreicht und die Taktfrequenz dadurch abgesenkt wird. Ferner wirkt sich die Zuschaltung auf den sinusförmigen Strom des Asynchrongenerators aus, indem ein tatsächlicher ohmscher Widerstand anliegt. Steigt die sinusförmige Eingangsspannung wieder über die Referenzspannung U_{ref}, wird die Einheit 16 wieder vom Schalter 50 kurzgeschlossen und ist somit außer Funktion.

Beim Einschalten der AC Stromquelle bzw. beim Hochfahren des Systems ist der Schalter 50 offen. Der Strom fließt demnach durch die von dem NTC-Widerstand gebildete Einheit 16 und wird auf einen bekannten Wert begrenzt. Nach einer gewissen Zeit, wenn das System angelaufen ist, schließt der Schalter 50 und die vom NTC-Widerstand gebildete Einheit 16 wird kurzgeschlossen. Zu diesem Zeitpunkt ist der Kondensator 42 aufgeladen, der ohne die Aktiveinheit 14 und ohne den NTC-Widerstand 28 zu einem hohen Einschaltstrom geführt hätte, so dass das Deaktivieren der vom NTC-Widerstand gebildeten Einheit 16 keine Folgen hat. Bedingt durch die Aktiveinheit 14 kann der NTC-Widerstand 28 vorteilhaft klein dimensioniert oder sogar vollständig eliminiert werden, wodurch Verluste und eine dadurch bedingte Erwärmung zumindest reduziert werden können.

Durch die Ausbildung der Einheit 16 als NTC-Widerstand können Fehlfunktionen und Überhitzungen bei Ausfall des Schalters 50 vermieden werden.

### Bezugszeichen

- 10: Regeleinheit
- 12: Spannungsverlauf
- 14: Aktiveinheit
- 16: Einheit
- 18: Bereich
- 20: Nulldurchgang
- 22: Steuereinheit
- 24: Anschluss
- 26: Anschluss
- 28: NTC-Widerstand
- 30: Brückengleichrichter
- 32: Pufferkondensator
- 34: Schalter
- 36: PFC-Chip
- 38: Elektronikeinheit
- 40: Diode
- 42: Kondensator
- 44: Widerstand
- 46: Widerstand
- 48: Pfad
- 50: Schalter

- 52: Anschluss
- 54: Pfad
- 56: Widerstand
- 58: Widerstand
- U_{ref}: Referenzspannung
- A: Andockpunkt
- B: Andockpunkt

## Patentansprüche

1. Stromversorgungsvorrichtung, insbesondere für ein Flugzeug, mit einer Regeleinheit (10), die einen PFC-Chip (Power Factor Correction) (36) zur Leistungsfaktorkorrektur aufweist und mit wenigstens einer Aktiveinheit (14) mit zumindest einer zuschaltbaren Einheit (16), die von einer Widerstandseinheit gebildet und zu einer Begrenzung eines Einschaltstroms vorgesehen ist,
**dadurch gekennzeichnet, dass**
die Aktiveinheit (14) dazu vorgesehen ist, die zuschaltbare Einheit (16) in einem Bereich (18) eines Nulldurchgangs (20) eines Spannungsverlaufs (12), der von der Eingangsspannung gebildet ist, in einen Strompfad ein zuschalten, um einen Abweichungsfehler in der Steuerung des Schaltkreises zur Leistungsfaktorkorrektur im Bereich des Nulldurchgangs der Eingangsspannung zu reduzieren.

2. Stromversorgungsvorrichtung nach Anspruch 1,
**dadurch gekennzeichnet, dass**
die Einheit (16) wenigstens einen ohmschen Widerstand aufweist.

3. Stromversorgungsvorrichtung nach einem der vorhergehenden Ansprüche,
**dadurch gekennzeichnet, dass**
die Einheit (16) zumindest in einem Bereich wenigstens einen von einem Temperaturwert abhängigen Kennwert aufweist, um ein gezieltes Temperaturverhalten zu erreichen.

4. Stromversorgungsvorrichtung nach Anspruch 3,
**dadurch gekennzeichnet, dass**
die Einheit (16) ein NTC-Verhalten aufweist.

5. Stromversorgungsvorrichtung nach einem der vorhergehenden Ansprüche,
**dadurch gekennzeichnet, dass**
die Aktiveinheit (14) wenigstens eine Steuereinheit (22) aufweist, die dazu vorgesehen ist, zumindest bei einem bestimmten Phasenwinkel einen Schaltvorgang einzuleiten.

6. Stromversorgungsvorrichtung nach einem der vorhergehenden Ansprüche,
**dadurch gekennzeichnet, dass**
die Aktiveinheit (14) wenigstens einen Komparator umfasst.

7. Verfahren zum Angleichen eines Stromverlaufs an einen spannungsverlauf (12) in einer Stromversorgungsvorrichtung, insbesondere für ein Flugzeug, mit einer Regeleinheit (10), die einen PFC-Chip (Power Factor Correction) (36) zur Leistungsfaktorkorrektur aufweist , und mit wenigstens einer Aktiveinheit (14) mit zumindest einer zuschaltbaren Einheit (16), die von einer Widerstandseinheit gebildet und zu einer Begrenzung eines Einschaltstroms vorgesehen ist,
**dadurch gekennzeichnet, dass**
die Aktiveinheit (14) die zuschaltbare Einheit (16) in einem Bereich (18) eines Nulldurchgangs (20) eines Spannungsverlaufs (12), der von einer Eingangsspannung gebildet ist, in einen Strompfad ein schaltet , um einen Abweichungsfehler in der Steuerung des Schaltkreises zur Leistungsfaktorkorrektur im Bereich des Nulldurchgangs der Eingangsspannung zu reduzieren.

8. Verfahren nach Anspruch 7,
**dadurch gekennzeichnet, dass** eine Widerstandseinheit zugeschaltet wird.

## Claims

1. Power supply apparatus, particularly for an aircraft, having a regulatory unit (10) which has a PFC (Power Factor Correction) chip (36) for power factor correction and having at least one active unit (14) with at least one connectable unit (16) which is formed by a resistor unit and is provided for the purpose of limiting a start-up current,
**characterized in that**
the active unit (14) is provided for the purpose of connecting the connectable unit (16) to a current path in a range (18) of a zero crossing (20) in a voltage profile (12) which is formed by the input voltage, in order to reduce a deviation error in the control of the circuit for power factor correction in the region of the zero crossing in the input voltage.

2. Power supply apparatus according to Claim 1,
**characterized in that**
the unit (16) has at least one ohmic resistor.

3. Power supply apparatus according to either of the preceding claims,
**characterized in that**
the unit (16) has, at least in one range, at least one parameter which is dependent on a temperature value in order to achieve a specific temperature response.

4. Power supply apparatus according to Claim 3,
**characterized in that**
the unit (16) has an NTC response.

5. Power supply apparatus according to one of the preceding claims
**characterized in that**
the active unit (14) has at least one control unit (22) which is provided for initiating a switching operation at least at a particular phase angle.

6. Power supply apparatus according to one of the preceding claims,
**characterized in that**
the active unit (14) comprises at least one comparator.

7. Method for aligning a current profile with a voltage profile (12) in a power supply apparatus, particularly for an aircraft, having a regulatory unit (10) which has a PFC (Power Factor Correction) chip (36) for power factor correction and having at least one active unit (14) with at least one connectable unit (16) which is formed by a resistor unit and is provided for the purpose of limiting a start-up current
**characterized in that**
the active unit (14) connects the connectable unit (16) to a current path in a range (18) of a zero crossing (20) in a voltage profile (12) which is formed by an input voltage, in order to reduce a deviation error in the control of the circuit for power factor correction in the region of the zero crossing in the input voltage.

8. Method according to Claim 7,
**characterized in that**
a resistor unit is connected.

## Revendications

1. Dispositif d'alimentation en courant, en particulier pour un avion, le dispositif présentant une unité de régulation (10) dotée d'une puce (36) dite de PFC ("power factor correction" - correction du facteur de puissance) pour corriger le facteur de puissance et au moins une unité active (14) dotée d'au moins une unité (16) apte à être raccordée, formée par une unité à résistance et prévue pour limiter le courant de branchement,
**caractérisé en ce que**
l'unité active (14) est prévue pour brancher dans une branche de circuit l'unité (16) apte à être raccordée, dans la plage (18) du passage par zéro (20) du cours (12) du voltage formé par le voltage d'entrée, pour réduire l'erreur d'écart de la commande du circuit de couplage pour corriger le facteur de puissance dans la plage du passage par zéro du voltage d'entrée.

2. Dispositif d'alimentation en courant selon la revendication 1, **caractérisé en ce que** l'unité (16) présente au moins une résistance ohmique.

3. Dispositif d'alimentation en courant selon l'une des revendications précédentes, **caractérisé en ce que** l'unité (16) présente dans au moins une plage au moins une valeur caractéristique qui dépend de la valeur de la température, pour atteindre un comportement thermique ciblé.

4. Dispositif d'alimentation en courant selon la revendication 3, **caractérisé en ce que** l'unité (16) présente un comportement NTC.

5. Dispositif d'alimentation en courant selon l'une des revendications précédentes, **caractérisé en ce que** l'unité active (14) présente au moins une unité de commande (22) prévue pour lancer une opération de commutation à au moins un angle de phase défini.

6. Dispositif d'alimentation en courant selon l'une des revendications précédentes, **caractérisé en ce que** l'unité active (14) présente au moins un comparateur.

7. Procédé pour ajuster le cours d'un courant au cours (12) d'un voltage dans un dispositif d'alimentation en courant, en particulier pour avion,
le dispositif présentant une unité de régulation (10) dotée d'une puce (36) dite de PFC ("power factor correction" - correction du facteur de puissance) pour corriger le facteur de puissance et au moins une unité active (14) dotée d'au moins une unité (16) apte à être raccordée, formée par une unité à résistance et prévue pour limiter le courant de branchement,
**caractérisé en ce que**
l'unité active (14) branche dans une branche de circuit l'unité (16) apte à être raccordée, dans la plage (18) du passage par zéro (20) du cours (12) d'un voltage formé par un voltage d'entrée, pour réduire l'erreur d'écart de la commande du circuit de couplage à la correction du facteur de puissance dans la plage du passage par zéro du voltage d'entrée.

8. Procédé selon la revendication 7, **caractérisé en ce qu'**il raccorde une unité à résistance.
